# EUROPÄISCHE PATENTANMELDUNG

(11) **EP 2 919 367 A1**
(43) Veröffentlichungstag der Anmeldung: **16.09.2015**
(21) Anmeldenummer: 14159920.9
(22) Anmeldetag: 14.03.2014
(51) Int. Cl.: H02K 1/32, H02K 3/14, H02K 3/24

(54) **Rotor einer rotierenden elektrischen Maschine**

(71) Anmelder: Siemens Aktiengesellschaft, 80333 München (DE)
(72) Erfinder: Balke, Benjamin, 10589 Berlin (DE); Balzer, Christoph, 12163 Berlin (DE); Seibicke, Frank, 14822 Borkheide (DE)

(57) **Zusammenfassung**

Die Erfindung betrifft einen Rotor (1) einer rotierenden elektrischen Maschine. Der Rotor (1) umfasst ein Rotorblechpaket (3) mit parallel zu einer Rotorachse des Rotors (1) verlaufenden Nuten (5) und zu den Nuten (5) korrespondierende Wicklungsstäbe (7), wobei in jeder Nut (5) ein Wicklungsstab (7) angeordnet ist. Ferner verläuft in jeder Nut (5) im Bereich ihres Nutgrunds (11) parallel zu der Rotorachse über die gesamte Längsausdehnung der Nut (5) wenigstens ein Kühlkanal (15) zur Durchleitung eines Kühlmediums.

## Beschreibung

Die Erfindung betrifft einen Rotor einer rotierenden elektrischen Maschine.

Insbesondere betrifft die Erfindung einen Rotor einer rotierenden elektrischen Maschine in Käfigläuferbauform mit einem Rotorblechpaket, das axial verlaufende Nuten aufweist, in denen Wicklungsstäbe angeordnet sind. Die Rotoren erwärmen sich im elektrischen Betrieb und werden daher gekühlt. Zur Kühlung der Rotoren werden insbesondere radiale oder axiale Belüftungen verwendet. Rotorblechpakete radial belüfteter Rotoren weisen radiale Kühlschlitze auf, durch die radial Kühlluft geleitet wird, welche die Wärme aus dem Rotorblechpaket und den Wicklungsstäben abführt. Bei axial belüfteten Rotoren entfallen diese Kühlschlitze. Stattdessen werden im Rotorblechpaket axiale Kühlkanäle vorgesehen, durch welche Kühlluft strömen kann. Man spricht in diesem Fall von einer Durchzugsbelüftung.

DE 102008002299 A1 offenbart einen Rotor eines Generators, der in einem Rotorballen angeordnete Axialnuten mit in diesen axial verlaufenden Leiterstäben mit je zwei parallel geführten, axialen Kühlkanälen aufweist.

Der Erfindung liegt die Aufgabe zugrunde, einen insbesondere hinsichtlich der Kühlung verbesserten Rotor einer rotierenden elektrischen Maschine anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Ein erfindungsgemäßer Rotor einer rotierenden elektrischen Maschine umfasst ein Rotorblechpaket mit parallel zu einer Rotorachse des Rotors verlaufenden Nuten und zu den Nuten korrespondierende Wicklungsstäbe. Dabei ist in jeder Nut ein Wicklungsstab angeordnet und in jeder Nut verläuft im Bereich ihres Nutgrunds parallel zu der Rotorachse über die gesamte Längsausdehnung der Nut wenigstens ein Kühlkanal zur Durchleitung eines Kühlmediums.

Durch die in den Nuten verlaufenden Kühlkanäle wird Wärme direkt aus denjenigen Bereichen des Rotors abgeführt, in denen sich die Wicklungsstäbe befinden. Diese Kühlung des Rotors berücksichtigt vorteilhaft, dass Wärme im Rotor vor allem in den Bereichen der Wicklungsstäbe entsteht und eine direkte Wärmeabführung aus diesen Bereichen daher eine besonders effektive Kühlung des Rotors bewirkt. Insbesondere verbessert dies die Kühlung des Rotors gegenüber bekannten Kühlsystemen mit axial in dem Rotorblechpaket angeordneten Kühlkanälen, die in keinem direkten Kontakt mit Wicklungsstäben stehen, so dass die an den Wicklungsstäben entstehende Wärme über Konvektion zunächst an die die Wicklungsstäbe umgebenden Bereiche des Rotorblechpaketes übertragen und dann durch das Rotorblechpaket zu den Kühlkanälen geleitet werden muss, wodurch sich der Weg der Wärmeübertragung zu den Kühlkanälen verlängert und die Kühleffektivität beeinträchtigt wird.

Die Erfindung verbessert insgesamt die Kühlung des Rotors und ermöglicht dadurch auch eine axiale Verlängerung des Rotors, da die Länge eines Rotors durch die abführbare Verlustwärme limitiert und daher durch eine Verbesserung der Kühlung des Rotors erweiterbar ist.

Eine Ausgestaltung der Erfindung sieht vor, dass ein nutgrundseitiger Endabschnitt jedes Wicklungsstabes als ein zu dem Nutgrund der den Wicklungsstab enthaltenden Nut reichender über die gesamte Längsausdehnung der Nut verlaufender Kühlsteg ausgebildet ist, so dass in der Nut auf wenigstens einer Seite des Kühlsteges ein einen Kühlkanal bildender Hohlraum entsteht.

Dadurch wird vorteilhaft auf einfache und damit kostengünstige Weise, nämlich allein durch die Ausbildung der Wicklungsstäbe wenigstens ein Kühlkanal in jeder Nut erzeugt. Die Ausbildung der Endabschnitte der Wicklungsstäbe als zu den Nutgründen reichende Kühlstege stabilisiert dabei ferner vorteilhaft die Anordnung der Wicklungsstäbe in den Nuten und vergrößert außerdem vorteilhaft die wirksamen Kühloberflächen der Wicklungsstäbe. Diese Ausgestaltung kann auch dahin gehend vereinfacht werden, dass die Kühlstege entfallen und in jeder Nut ein Kühlkanal durch einen Hohlraum zwischen einem nutgrundseitigen Ende des in der Nut angeordneten Wicklungsstabes und den Nutgrund gebildet wird. Dadurch wird die Form des Wicklungsstabes vorteilhaft vereinfacht, wobei allerdings die wirksamen Kühloberflächen der Wicklungsstäbe gegenüber der Ausführung mit Kühlstegen verkleinert werden.

Eine alternative Ausgestaltung der Erfindung sieht vor, dass in jeder Nut ein an dem Nutgrund der Nut und an dem in der Nut angeordneten Wicklungsstab anliegendes und parallel zu der Rotorachse über die gesamte Längsausdehnung der Nut verlaufendes Kühlkanalrohr angeordnet ist, das einen Kühlkanal definiert.

Dabei werden die Kühlkanäle durch die Kühlkanalrohre gebildet. Durch das Anliegen der Wicklungsstäbe an den Kühlkanalrohren wird vorteilhaft eine direkte Wärmeübertragung von den Wicklungsstäben zu den Kühlkanalrohren ermöglicht.

Vorzugsweise liegt dabei in jeder Nut das Kühlkanalrohr flächig an dem Nutgrund und/oder an dem in der Nut angeordneten Wicklungsstab an.

Durch das flächige Anliegen der Kühlkanalrohre an den Nutgründen und/oder an den Wicklungsstäben wird vorteilhaft die Wärmeübertragung von dem Rotorblechpaket und/oder den Wicklungsstäben zu den Kühlkanalrohren verbessert.

Insbesondere weist jeder Wicklungsstab vorzugsweise eine Wicklungsstabnut auf, die das in der den Wicklungsstab enthaltenden Nut angeordnete Kühlkanalrohr teilumfänglich umschließt.

Dadurch werden die Berührungsflächen der Wicklungsstäbe mit den Kühlkanalrohren und damit die Wärmeübertragung zwischen den Wicklungsstäben und den Kühlkanalrohren besonders vorteilhaft vergrößert.

Des Weiteren sind das in einer Nut angeordnete Kühlkanalrohr und der in der derselben Nut angeordnete Wicklungsstab vorzugsweise aus dem demselben Material gefertigt.

Dadurch fungieren die Kühlkanalrohre als Teile der Wicklungsstäbe und wirken somit vorteilhaft als Vergrößerungen der Wicklungsstäbe.

Eine weitere alternative Ausgestaltung der Erfindung sieht vor, dass jeder Wicklungsstab eine einen Kühlkanal bildende Längsbohrung aufweist, die durch einen nutgrundseitigen Endabschnitt des Wicklungsstabes parallel zu der Rotorachse über die gesamte Längsausdehnung des Wicklungsstabes verläuft.

Diese Ausgestaltung vereinfacht die vorgenannte Ausgestaltung insofern, als keine separaten Kühlkanalrohre benötigt werden, sondern die Kühlkanäle durch die Bohrungen in den Wicklungsstäben gebildet werden. Allerdings wird die Ausbildung und Herstellung der Wicklungsstäbe dadurch aufwändiger.

Die Erfindung sieht ferner die Verwendung eines erfindungsgemäßen Rotors insbesondere als Rotor einer rotierenden elektrischen Maschine einer Propellergondel, die auch als Pod-Antrieb bezeichnet wird, vor.

Diese Verwendung erfindungsgemäßer Rotoren ist insbesondere für Propellergondeln von Wasserfahrzeugen vorteilhaft, bei denen die Propellergondeln direkt im Wasser liegen, da dafür schlank ausgebildete Rotoren strömungstechnisch besonders bevorzugt sind und die Erfindung aus oben genannten Gründen die Konstruktion längerer und damit bei gleicher Leistung schmalerer Rotoren ermöglicht. Dabei wird vorteilhaft ausgenutzt, dass die axiale Länge einer Propellergondel im Unterschied zu ihrem Durchmesser den hydrodynamischen Wirkungsgrad nicht beeinträchtigt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch und ausschnittsweise ein erstes Ausführungsbeispiel eines Rotors einer rotierenden elektrischen Maschine in einer Querschnittsdarstellung, und
- FIG 2: schematisch und ausschnittsweise ein zweites Ausführungsbeispiel eines Rotors einer rotierenden elektrischen Maschine in einer Querschnittsdarstellung.

Einander entsprechende Teile sind in den Figuren mit den gleichen Bezugszeichen versehen.

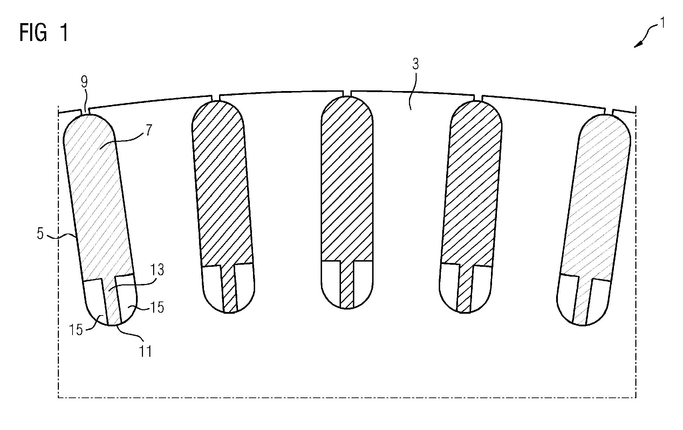

Figur 1 zeigt schematisch und ausschnittsweise ein erstes Ausführungsbeispiel eines Rotors 1 einer rotierenden elektrischen Maschine in einer Querschnittsdarstellung mit einer zu einer Rotorachse orthogonalen Schnittebene. Die Rotorachse definiert eine zu ihr parallele axiale Richtung.

Der Rotor 1 weist ein Rotorblechpaket 3 mit parallel zu der Rotorachse verlaufenden Nuten 5 auf. In jeder Nut 5 ist ein zu der Nut 5 korrespondierender Wicklungsstab 7 angeordnet, der sich über die gesamte Längsausdehnung der Nut 5 erstreckt.

Die Nuten 5 weisen jeweils eine Nutöffnung 9 zu einer Außenseite des Rotors 1 auf, wobei die Nutöffnung 9 schmaler als ein im Inneren des Rotorblechpaketes 3 liegender Nutabschnitt ist.

Ein nutgrundseitiger Endabschnitt jedes Wicklungsstabes 7 ist als ein zu dem Nutgrund 11 der den Wicklungsstab 7 enthaltenden Nut 5 reichender über die gesamte Längsausdehnung der Nut verlaufender Kühlsteg 13 ausgebildet, so dass in der Nut 5 auf jeder Seite des Kühlsteges 13 ein Hohlraum entsteht, der einen Kühlkanal 15 zur Durchleitung eines Kühlmediums bildet.

Jeder Wicklungsstab 7 füllt die ihn enthaltende Nut 5 mit Ausnahme der Kühlkanäle 15 und der Nutöffnung 9 vollständig aus und ist beispielsweise als eine profilierte Kupferstange ausgebildet.

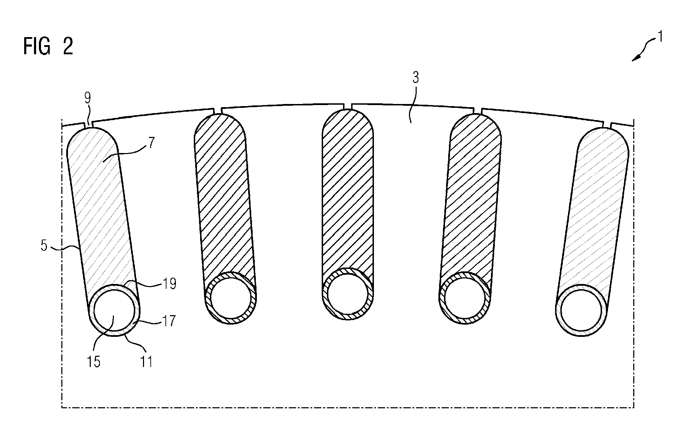

Figur 2 zeigt schematisch und ausschnittsweise ein zweites Ausführungsbeispiel eines Rotors 1 einer rotierenden elektrischen Maschine in einer Querschnittsdarstellung mit einer zu einer Rotorachse orthogonalen Schnittebene.

Dieses Ausführungsbeispiel unterscheidet sich von dem in Figur 1 dargestellten ersten Ausführungsbeispiel lediglich durch die Ausbildung der Wicklungsstäbe 7 und dadurch, dass in jeder Nut 5 ein Kühlkanalrohr 17 angeordnet ist.

Jedes Kühlkanalrohr 17 ist an dem Nutgrund 11 einer Nut 5 angeordnet, erstreckt sich parallel zu der Rotorachse über die gesamte Längsausdehnung der Nut 5 und liegt flächig an dem Nutgrund 11 und dem in der Nut 5 angeordneten Wicklungsstab 7 an. Dazu weist jeder Wicklungsstab 7 eine Wicklungsstabnut 19 auf, die ein Kühlkanalrohr 17 teilumfänglich umschließt, und der nutgrundseitige Teil der Außenoberfläche eines Kühlkanalrohres 17 korrespondiert zu der Form des Nutgrundes 11 einer Nut 5.

Im in Figur 2 dargestellten Ausführungsbeispiel ist jedes Kühlkanalrohr 17 als ein Hohlzylinder mit einer kreisförmigen Querschnittsfläche ausgebildet. Entsprechend weisen der Nutgrund 11 einer Nut 5 und die Wicklungsstabnut 19 eines Wicklungsstabes 17 in einer zu der Rotorachse orthogonalen Ebene halbkreisförmige Konturen auf, deren Radien zu dem Radius der kreiszylinderförmigen Außenoberfläche eines Kühlkanalrohres 17 korrespondieren.

Die Kühlkanalrohre 17 sind vorzugsweise aus demselben Material wie die Wicklungsstäbe 7, beispielsweise aus Kupfer, gefertigt und definieren einen durch sie hindurch verlaufenden Kühlkanal 15 zur Durchleitung eines Kühlmediums, beispielsweise zur Durchleitung von Wasser, Öl oder Luft.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rotor (1) einer rotierenden elektrischen Maschine, umfassend
- ein Rotorblechpaket (3) mit parallel zu einer Rotorachse des Rotors (1) verlaufenden Nuten (5)
- und zu den Nuten (5) korrespondierende Wicklungsstäbe (7),
- wobei in jeder Nut (5) ein Wicklungsstab (7) angeordnet ist
- und in jeder Nut (5) im Bereich ihres Nutgrunds (11) parallel zu der Rotorachse über die gesamte Längsausdehnung der Nut (5) wenigstens ein Kühlkanal (15) zur Durchleitung eines Kühlmediums verläuft.

2. Rotor (1) nach Anspruch 1,
**dadurch gekennzeichnet, dass** ein nutgrundseitiger Endabschnitt jedes Wicklungsstabes (7) als ein zu dem Nutgrund (11) der den Wicklungsstab (7) enthaltenden Nut (5) reichender über die gesamte Längsausdehnung der Nut (5) verlaufender Kühlsteg (13) ausgebildet ist, so dass in der Nut (5) auf wenigstens einer Seite des Kühlsteges (13) ein einen Kühlkanal (15) bildender Hohlraum entsteht.

3. Rotor (1) nach Anspruch 1,
**dadurch gekennzeichnet, dass** in jeder Nut (5) ein an dem Nutgrund (11) der Nut (5) und an dem in der Nut (5) angeordneten Wicklungsstab (7) anliegendes und parallel zu der Rotorachse über die gesamte Längsausdehnung der Nut (5) verlaufendes Kühlkanalrohr (17) angeordnet ist, das einen Kühlkanal (15) definiert.

4. Rotor (1) nach Anspruch 3,
**dadurch gekennzeichnet, dass** in jeder Nut (5) das Kühlkanalrohr (17) flächig an dem Nutgrund (11) anliegt.

5. Rotor (1) nach Anspruch 3 oder 4,
**dadurch gekennzeichnet, dass** in jeder Nut (5) das Kühlkanalrohr (17) flächig an dem in der Nut (5) angeordneten Wicklungsstab (7) anliegt.

6. Rotor (1) nach einem der Ansprüche 3 bis 5,
**dadurch gekennzeichnet, dass** jeder Wicklungsstab (7) eine Wicklungsstabnut (19) aufweist, die das in der den Wicklungsstab (7) enthaltenden Nut (5) angeordnete Kühlkanalrohr (17) teilumfänglich umschließt.

7. Rotor (1) nach einem der Ansprüche 3 bis 6,
**dadurch gekennzeichnet, dass** das in einer Nut (5) angeordnete Kühlkanalrohr (17) und der in der derselben Nut (5) angeordnete Wicklungsstab (7) aus dem demselben Material gefertigt sind.

8. Rotor (1) nach Anspruch 1,
**dadurch gekennzeichnet, dass** jeder Wicklungsstab (7) eine einen Kühlkanal (15) bildende Längsbohrung aufweist, die durch einen nutgrundseitigen Endabschnitt des Wicklungsstabes (7) parallel zu der Rotorachse über die gesamte Längsausdehnung des Wicklungsstabes (7) verläuft.

9. Propellergondel mit einer rotierenden elektrischen Maschine, die einen Rotor (1) gemäß einem der vorhergehenden Ansprüche aufweist.
